# EUROPÄISCHE PATENTSCHRIFT

(11) **EP 4 065 777 B1**
(45) Veröffentlichungstag und Bekanntmachung des Hinweises auf die Patenterteilung: **01.07.2026**
(21) Anmeldenummer: 20806969.0
(22) Anmeldetag: 11.11.2020
(51) Int. Cl.: E03C 1/186

(54) **SPÜLBECKEN MIT EINER ABHÄNGIG VON EINEM EINFLUSSFAKTOR AUTOMATISCH VERFAHRBAREN EINSATZPLATTE, SOWIE VERFAHREN**
SINK WITH SIGNAL-CONTROLLED DRIVABLE PLATE INSERT, AND METHOD THEREFOR
ÉVIER AVEC UNE PLAQUE MOBILE CONTROLÉE PAR UN SIGNAL, ET PROCÉDÉ

(30) Priorität: 29.11.2019 DE 102019218646
(43) Veröffentlichungstag der Anmeldung: 05.10.2022
(73) Patentinhaber: BSH Hausgeräte GmbH, 81739 München (DE)
(72) Erfinder: WÖLFLER, Andreas, 5760 Saalfelden (AT); REU, Benjamin, 83209 Prien am Chiemsee (DE)
(86) Internationale Anmeldenummer: PCT/EP2020/081725
(87) Internationale Veröffentlichungsnummer: WO 2021/104867

(56) Entgegenhaltungen:
- CN-A- 106 579 805
- CN-A- 109 235 561
- CN-A- 109 695 275
- CN-A- 111 021 495
- JP-A- 2004 049 675
- JP-B2- 5 851 291

## Beschreibung

Ein Aspekt der Erfindung betrifft ein Spülbecken mit einer Wanne. Die Wanne weist eine Bodenwand und daran anschließende Seitenwände auf. Die Wanne weist einen durch die Wände begrenzten Aufnahmeraum auf. Darüber hinaus weist das Spülbecken eine zur Wanne separate Einsatzplatte auf, die in den Aufnahmeraum eingesetzt ist. Das Spülbecken weist außerdem eine Hubvorrichtung auf, mit welcher die Einsatzplatte relativ zur Wanne verfahrbar ist. Das Spülbecken weist zudem eine Interaktionseinheit auf, mit welcher ein Betriebszustand des Spülbeckens erkennbar ist und/oder eine Betriebszustandsänderung des Spülbeckens erkennbar ist und/oder eine Bedienhandlung eines Nutzers des Spülbeckens erkennbar ist, wobei abhängig von dem Erkennen eines derartigen Einflussfaktors durch die Interaktionseinheit die Hubvorrichtung zur automatischen Positionsänderung der Einsatzplatte betreibbar ist. Ein weiterer Aspekt der Erfindung betrifft ein Verfahren zum Betreiben eines Spülbeckens.

Derartige Spülbecken sind bekannt. So ist beispielsweise aus der CN106579805A ist ein Küchenschrank mit einem zweiteiligen Becken und einem hinter dem Becken angeordneten Wasserhahn bekannt. Innerhalb des Beckens ist eine Hubplatte mittels einer Schubstange verfahrbar angeordnet.

Aus der CN109695275A ist ein Gemüsewaschbecken mit einer automatischen Hubeinrichtung bekannt, welche durch einen Schalter gesteuert wird.

Aus der CN109235561A ist eine Gemüsewaschvorrichtung bekannt, welche einen in einem Waschbecken angeordneten Filterkorb aufweist, der mittels eines Zahnstangenantriebs verfahrbar ist.

In der CN111021495A ist ein Waschbecken mit zwei horizontal verfahrbaren Platten offenbart, durch welche das Waschbecken geschlossen werden kann.

Aus der JP 2004 049 675 A ist ein Spülbecken bekannt, welches bei Nichtgebrauch elektrisch oder manuell in eine Verstauposition verbracht werden kann.

Die JP 5 851 291 B2 beschreibt eine Küchentheke mit einer oberen Platte, einem Spülbecken und mit einem Arbeitsbereich. Es ist ferner ein Hebemechanismus vorgesehen, der zum Heben und Senken der oberen Platte ausgelegt ist.

Aus der US 2005/0067747 A1 ist ein Spülbecken bekannt, welches eine Wanne aufweist. Am Wannenboden ist ein mit dem Wannenboden einstückig ausgebildeter und nach oben sich erstreckender Sockel ausgebildet. Auf diesen Sockel kann eine Platte aufgebracht werden. Dadurch ist ein Schneidebrett gebildet, auf welchem das Schneiden von Gegenständen, wie Lebensmitteln, erfolgen kann. Eine derartige Ausgestaltung ist dahingehend nachteilig, dass der integrierte Sockel stets vorhanden ist und somit eine grundsätzliche Ausgestaltung der Wanne formkomplex ist, als auch den Aufnahmeraum umfänglich einschränkend ausgebildet ist. Darüber hinaus ist die auf den Sockel aufsetzbare Platte stets nur auf einem Höhenniveau angeordnet. Sie kann nur durch einen Nutzer aufgesetzt oder abgenommen werden.

Darüber hinaus ist aus der DE 362 1151 A1 ein Spülbecken bekannt. Separat zur Wanne sind unterschiedliche Einsätze bereitgestellt, die in den Aufnahmeraum eingebracht werden können. Die Einsätze können Platten oder weitere wannenartige Behältnisse sein. Diese können am oberen Rand der Wanne aufgesetzt werden. Auch dadurch ist die Nutzbarkeit eines Spülbeckens stark eingeschränkt und die Einsätze müssen durch einen Nutzer angebracht oder entnommen werden und sind stets nur auf einer individuellen Lage positionierbar.

Es ist Aufgabe der vorliegenden Erfindung, ein Spülbecken mit einer Wanne und einer separaten Einsatzplatte sowie ein Verfahren bereitzustellen, bei welchem die Positionierung der Einsatzplatte verbessert ist.

Diese Aufgabe wird durch ein Spülbecken und ein Verfahren gemäß den unabhängigen Ansprüchen gelöst.

Ein Aspekt der Erfindung betrifft ein Spülbecken mit einer Wanne. Die Wanne weist eine Bodenwand und daran anschließende Seitenwände auf. Die Wanne weist darüber hinaus einen Aufnahmeraum auf, der durch die Bodenwand und die Seitenwände begrenzt ist.

Der Aufnahmeraum ist nach oben hin offen. Das Spülbecken weist eine zur Wanne separate Einsatzeinheit, welche als Einsatzplatte, insbesondere als eine zusammenhängende und lochfreie Einsatzplatte, ausgebildet ist, auf. Diese ist in den Aufnahmeraum einsetzbar beziehungsweise darin eingesetzt. Das Spülbecken weist darüber hinaus eine Hubvorrichtung auf, mit welcher die Einsatzplatte in Höhenrichtung des Spülbeckens relativ zur Wanne verfahrbar ist. Das Spülbecken weist darüber hinaus eine Interaktionseinheit auf. Mit der Interaktionseinheit ist ein Betriebszustand des Spülbeckens erkennbar und/oder eine Betriebszustandsänderung des Spülbeckens erkennbar und/oder eine Bedienhandlung eines Nutzers des Spülbeckens, der das Spülbecken bedient, erkennbar. Abhängig von dem Erkennen durch die Interaktionseinheit ist die Hubvorrichtung zur automatischen Positionierung, insbesondere einer Positionsänderung, der Einsatzeinheit betreibbar, wobei die Hubvorrichtung auch so eingestellt werden kann, dass die Einsatzplatte gegenüber einer Horizontalebene schräggestellt beziehungsweise geneigt eingestellt werden kann und die Positionsänderung eine Kippbewegung um eine horizontal orientierte Achse ist. Die Interaktionseinheit bewirkt, dass diese Positionsänderung nicht nur automatisch erfolgen kann, sondern abhängig von ganz spezifischen Einflusskriterien. Sind diese Einflusskriterien erkannt, erfolgt diese Positionierung durch die Hubvorrichtung selbstständig. Es wird also ein Spülbecken geschaffen, welches im Hinblick auf die Positionierung der Einsatzeinheit auch intelligent agiert.

Derartige Einflusskriterien sind somit indirekte Indikatoren, die das Spülbecken erkennen lassen, dass eine Positionierung der Einsatzeinheit vorteilhaft ist und/oder gewünscht ist. In dem Zusammenhang können entsprechende Verknüpfungen zwischen Einflussfaktoren und zugeordneten Positionen der Einsatzplatte oder Positionsänderungen der Einsatzplatte durch einen Nutzer vordefiniert sein. Es kann jedoch auch vorgesehen sein, dass beispielsweise aufgrund der Auswertung vergangener Handlungsweisen des Nutzers durch die Interaktionseinheit gelernt wurde, mit welchen Einflusskriterien der Nutzer in der Vergangenheit welche Position und/oder Positionsänderung der Einsatzplatte eingestellt hat. Durch eine derartige Ausgestaltung kann das Spülbecken auch als selbstlernendes System im Hinblick auf die Verknüpfung eines Einflussfaktors und der dazu vorteilhaften oder gewünschten Position und/oder Positionsänderung der Einsatzplatte ausgebildet sein.

Es ist vorgesehen, dass die Hubvorrichtung auch so eingestellt werden kann, dass die Einsatzplatte gegenüber einer Horizontalebene schräggestellt beziehungsweise geneigt eingestellt werden kann und die Positionsänderung eine Kippbewegung um eine horizontal orientierte Achse ist. Damit kann die Platte geneigt beziehungsweise schräggestellt angeordnet werden. Dies kann beispielsweise Vorteile dann haben, wenn Flüssigkeit auf der Oberseite der Einsatzplatte vorhanden ist und gezielt in die Wanne ablaufen soll. Ebenso ist dann auch die Reinigbarkeit mit aus dem Wasserhahn auslaufendem Wasser verbessert ermöglicht, da Medien auf der Oberseite der Einsatzplatte leichter abgewaschen werden können. Denn dann trifft der Strahl des Wasserhahns insbesondere nicht mehr senkrecht auf die Oberseite, sondern in einem dazu reduzierten spitzen Winkel. Das Abspritzverhalten des Wasserstrahls, der auf die Oberseite der Einsatzplatte trifft, ist damit reduziert beziehungsweise erfolgt umfänglich in die Wanne hinein. Ein unerwünschtes zu starkes seitliches Spritzen über die Wanne hinaus ist dadurch vermieden.

In einer vorteilhaften Ausführung ist vorgesehen, dass die Interaktionseinheit eine Kamera und/oder eine Bedienvorrichtung aufweist. Dies ist eine weitere vorteilhafte Ausführung. Denn durch eine Kamera können unterschiedlichste und gleichzeitig mehrere Einflusskriterien erfasst werden. In dem Zusammenhang kann beispielsweise eine Funktionseinheit des Spülbeckens optisch erfasst werden. Zusätzlich oder anstatt dazu kann jedoch auch ein Nutzer optisch erfasst werden. Abhängig von diesen erfassten Informationen kann dann ein Einflusskriterium erkannt werden. Abhängig von diesem kann dann wiederum die Positionierung der Einsatzplatte durchgeführt werden. Ein Einflusskriterium, wie es genannt wurde, kann der Betriebszustand des Spülbeckens und/oder eine Betriebszustandsänderung des Spülbeckens und/oder eine Bedienhandlung eines Nutzers des Spülbeckens, der das Spülbecken bedient, sein. In dem Zusammenhang kann ein Betriebszustand ein aktueller Betriebszustand oder ein vergangener Betriebszustand sein. Eine Betriebszustandsänderung kann eine aktuelle Betriebszustandsänderung oder eine bereits vergangene Betriebszustandsänderung sein. Ein Betriebszustand kann jedoch auch ein zukünftig zu erwartender Betriebszustand sein. Ebenso kann eine Betriebszustandsänderung eine zukünftig zu erwartende Betriebszustandsänderung sein. Derartige zukünftige Zustände können durch die Interaktionseinheit geschätzt oder vorhergesagt werden. Dies kann beispielsweise auf Basis von vergangenen Betriebszuständen und/oder aktuellen Betriebszuständen und/oder vergangenen Betriebszustandsänderungen und/oder vergangenen Betriebszustandsänderungen erfolgen. Auch kann dies anhand von aktuellen und/oder vergangenen Bedienhandlungen eines Nutzers des Spülbeckens sein. Es können also Bedienhandlungen des Spülbeckens durch einen Nutzer aktuell und/oder in der Vergangenheit diesbezüglich berücksichtigt werden.

Ein weiterer Vorteil einer Kamera ist es auch, dass derartige Einflusskriterien berührungslos erfasst werden können.

Auch bei einer Bedienvorrichtung können entsprechende Betriebszustände und/oder Betriebszustandsänderungen und/oder spezifische Bedienhandlungen erkannt werden und ausgewertet werden. Eine Bedienvorrichtung kann grundsätzlich Bedienelemente wie Tasten, Schalter oder dergleichen aufweisen. Diese können manuell betätigt werden. Eine Bedienvorrichtung kann jedoch auch beispielsweise ein berührsensitives Bedienfeld aufweisen. Die Bedienvorrichtung kann jedoch auch eine Anzeigeeinheit aufweisen.

In einer vorteilhaften Ausführung ist vorgesehen, dass ein Betriebszustand eine Einstellung der Bedienvorrichtung ist und/oder eine Änderung des Betriebszustands eine Änderung der Einstellung der Bedienvorrichtung ist.

In einer vorteilhaften Ausführung ist vorgesehen, dass eine Positionsänderung der Einsatzplatte abhängig von der Art und/oder der Stärke und/oder der Dauer eines Betriebszustands zumindest einer Funktionseinheit des Spülbeckens ist. Damit wird nicht nur ein grundsätzlicher Betriebszustand als Einflusskriterium definiert, sondern es wird in dieser vorteilhaften Ausführung auch noch der Betriebszustand detaillierter analysiert. Dies kann auch entsprechend durch die Interaktionseinheit erfasst und erkannt werden. Indem nicht nur pauschal ein Betriebszustand erkannt wird, sondern auch noch dieser Betriebszustand detaillierter analysiert wird, kann eine noch bedarfsgerechtere Einstellung der Position und/oder eine Positionsänderung einer Einsatzplatte erfolgen. In dem Zusammenhang kann somit auch nicht nur eine pauschale Position oder Positionsänderung der Einsatzplatte erfolgen, sondern es kann auch die Art der Positionsänderung und/oder die Dauer der Positionsänderung detaillierter erfolgen. Beispielsweise kann mit der Art einer Position beispielsweise die Lage der Einsatzplatte individuell eingestellt werden. Es kann z.B. eine Änderung von einer horizontalen Lage in eine gekippte Lage erfolgen. Darüber hinaus kann auch vorgesehen sein, dass beispielsweise ausgehend von einer gekippten Lage der Einsatzplatte die Neigung vergrößert oder verkleinert wird. Von der Art der Positionsänderung kann beispielsweise auch die Geschwindigkeit, mit welcher von einer Ausgangsposition in eine Endposition gewechselt wird, umfasst sein. Ebenso kann eine Positionsänderung auch ein Muster von nacheinander folgenden mehreren unterschiedlichen Positionen der Einsatzplatte bedeuten. Es kann somit ein individuelles Bewegungsmuster der Einsatzplatte ebenso durch die Art einer Positionsänderung umfasst sein. Beispielsweise kann dann auch ausgehend von einer ersten Lage der Einsatzplatte in eine zweite Lage gewechselt werden und von dieser zweiten Lage beispielsweise wiederum in die erste Lage gewechselt werden. Es kann jedoch auch dann, wenn diese zweite Lage erreicht wird, in zumindest eine dritte Lage gewechselt werden. Dies sind nur einige Beispiele für Bewegungsmuster, die auch unter dem Merkmal der Art einer Positionsänderung subsummiert werden können, zu verstehen. Es sind somit unterschiedlichste und vielfältigste Bewegungsmuster der Einsatzplatte unter einer Art einer Positionsänderung zu verstehen. Durch derartige Bewegungsmuster kann automatisch bestmöglich auf spezifische Einflussfaktoren reagiert werden, um den jeweiligen Verwendungszweck der Einsatzplatte bestmöglich bereitstellen zu können und/oder nachteilige Positionen der Einsatzplatte bei sich gegebenenfalls dynamisch verändernden Einflussfaktoren zu vermeiden. Es ist somit auch möglich, dass bei dynamischen Einflussfaktoren auch eine damit einhergehende dynamische Positionsänderung durchgeführt werden kann.

Es ist somit auch ermöglicht, dass mehrere, insbesondere zumindest zwei, Arten eines Betriebszustands vorhanden sein oder vorliegen können. Diese können von der Interaktionseinheit erkannt werden. Sie können somit auch unterschieden werden. Entsprechendes kann für die Stärke und/oder die Dauer vorgesehen sein. Entsprechendes kann auch für die Art und/oder Stärke und/oder Dauer einer Betriebszustandsänderung vorgesehen sein.

Insbesondere kann ein Zeitpunkt und/oder eine Geschwindigkeit und/oder eine Art einer Positionierung, insbesondere eine Positionsänderung, der Einsatzeinheit, bzw. der Einsatzplatte, bestimmt werden. Insbesondere erfolgt dies abhängig von der Art und/oder der Dauer und/oder der Stärke des Betriebszustands und/oder entsprechend der Betriebszustandsänderung.

In einer vorteilhaften Ausführung kann zusätzlich oder anstatt dazu vorgesehen sein, dass die Positionsänderung der Einsatzplatte abhängig von der Art und/oder Stärke und/oder Dauer einer Betriebszustandsänderung zumindest einer Funktionseinheit des Spülbeckens ist. Die oben genannten Ausführungsbeispiele für eine Art und/oder Stärke und/oder Dauer eines Betriebszustands sind in entsprechender Weise auch für die weitere Ausführungsform einer Art und/oder Dauer und/oder Stärke einer Betriebszustandsänderung zu verstehen. Die entsprechenden Vorteile sind hier dann analog erreicht.

In einer vorteilhaften Ausführung ist vorgesehen, dass das Spülbecken als Funktionseinheit beispielsweise einen Wasserhahn aufweist. Eine weitere Funktionseinheit kann beispielsweise eine Bedienvorrichtung sein. Eine nochmals weitere Funktionseinheit kann die Einsatzplatte selbst sein. Eine weitere Funktionseinheit kann beispielsweise die Hubvorrichtung sein. Durch eine derartige Detaillierung ist nicht nur der Gesamtzustand des Spülbeckens zu betrachten, sondern es können hier einzelne individuelle Funktionseinheiten betrachtet werden. Es können auch mehrere derartige genannte Funktionseinheiten des Spülbeckens zumindest zeitweise gleichzeitig beobachtet werden und im Hinblick auf ihre Betriebszustände und/oder Betriebszustandsänderungen analysiert werden. Durch eine derartige Ausgestaltung kann eine noch bedarfsgerechtere Position der Einsatzplatte und/oder eine Änderung der Position der Einsatzplatte erreicht werden. So ist gegebenenfalls eine Positionseinstellung beziehungsweise eine Positionsänderung der Einsatzplatte in einem spezifischen Betriebszustand oder bei einer spezifischen Betriebszustandsänderung des Wasserhahns anders vorzunehmen, als bei einem spezifischen Betriebszustand oder bei einer spezifischen Betriebszustandsänderung der Bedienvorrichtung.

In einer weiteren vorteilhaften Ausführung ist vorgesehen, dass eine Bedienhandlung eine berührungslose Geste des Nutzers des Spülbeckens ist. Dadurch kann der Betrieb des Spülbeckens auch gestengesteuert erfolgen. Dies ist ein weiterer Vorteil, da somit dann, wenn gegebenenfalls verschmutzte Finger des Nutzers vorliegen, die Bedienvorrichtung nicht direkt berührt werden muss und somit diese nicht ebenfalls verschmutzt wird.

Ebenso ist es möglich, dass eine Bedienhandlung ein Sprachbefehl, insbesondere eines Nutzers, ist. Der Sprachbefehl kann jedoch auch beispielsweise von einer anderen elektronischen Einheit, wie beispielsweise einem anderen Haushaltsgerät, erzeugt werden. Ebenso kann ein derartiger Sprachbefehl beispielsweise von einem Kommunikationsendgerät wie einem Mobilfunkendgerät oder einer sonstigen Akustikquelle erzeugt werden. Dies kann dann vorteilhaft sein, wenn ein Nutzer gegebenenfalls stumm oder sprachbehindert ist.

In einer vorteilhaften Ausführung kann eine Bedienhandlung ein eine Bedienfläche der Bedienvorrichtung berührender Vorgang sein. Beispielsweise kann ein Nutzer mit einem Finger direkt manuell einwirken. Ebenso kann eine Bedienhandlung ein Bedienvorgang der anderen Funktionseinheit des Spülbeckens sein. Beispielsweise kann dies ein Bedienvorgang eines Wasserhahns des Spülbeckens sein. Eine Bedienhandlung kann jedoch auch beispielsweise ein gezieltes Annähern eines Nutzers an das Spülbecken sein. Beispielsweise kann dies durch einen Näherungssensor oder durch die Kamera erfasst werden. Auch dadurch kann erkannt werden, dass eine unverzüglich bevorstehende Nutzung des Spülbeckens durch einen Nutzer auftritt. Es kann dann bereits, insbesondere vorher oder gleichzeitig mit der Nutzung, bedarfsgerecht eine vorteilhafte Position der Einsatzplatte eingestellt werden.

In einer vorteilhaften Ausführung kann vorgesehen sein, dass die Interaktionseinheit einen Definiermodus aufweist. In diesem Definiermodus, der unterschiedlich zum Normalmodus der Interaktionseinheit ist, kann zumindest ein Nutzer zumindest eine Referenzposition der Einsatzplatte definiert vorgeben. Insbesondere kann zumindest eine Referenzposition der Einsatzplatte mit einem spezifischen Betriebszustand und/oder einer spezifischen beziehungsweise definierten Betriebszustandsänderung verknüpft werden. Damit kann der Nutzer eine individuelle Konfiguration des Spülbeckens dahingehend vornehmen, dass er für sich bestimmt, welches Einflusskriterium zu welcher Position beziehungsweise Positionsänderung der Einsatzplatte führen soll. Damit wird eine besonders nutzerfreundliche Ausgestaltung des Spülbeckens ermöglicht. Denn es kann somit der Nutzer selbst für sich bestimmen, welche Position beziehungsweise Positionsänderung er für die Einsatzplatte bei welchen Bedingungen der Nutzung des Spülbeckens wünscht und für ihn vorteilhaft sind.

Es kann auch vorgesehen sein, dass für zumindest zwei verschiedene Nutzer eine derartige Einstellung von individuellen Referenzpositionen ermöglicht ist. Damit kann das Spülbecken abhängig von dem Nutzer, der das Spülbecken jeweils nutzt oder nutzen möchte, die dann gewünschte und zugeordnete Referenzposition der Einsatzplatte bei dem zugeordneten Einflusskriterium einstellen.

Es kann vorgesehen sein, dass die zumindest eine Referenzposition als Nutzerprofil in einer Speichereinheit der Interaktionseinheit abgespeichert ist. Die oben genannten Vorteile können dadurch nochmals verbessert werden. Insbesondere ist es auch möglich, dass mit einer Einheit des Spülbeckens, insbesondere der Interaktionseinheit, ein Nutzer erfasst und erkannt wird und abhängig davon ein gegebenenfalls abgespeichertes Nutzerprofil aufgerufen wird.

In einer vorteilhaften Ausführung ist vorgesehen, dass eine Oberseite der Einsatzplatte eine Fläche aufweist, die zumindest 80 Prozent, insbesondere zumindest 90 Prozent, insbesondere zumindest 95 Prozent der Fläche des Aufnahmeraums in einer Horizontalebene beträgt. Die Fläche der Oberseite der Einsatzplatte ist aber kleiner als 99 Prozent dieser Fläche des Aufnahmeraums. Durch eine derartige Dimensionierung wird die Einsatzplatte quasi vollflächig bezüglich der lichten Weite des Aufnahmeraums zwischen den Seitenwänden ausgebildet und füllt somit diesen Aufnahmeraum in der Horizontalebene betrachtet nahezu vollständig auf. Andererseits wird umlaufend jedoch ein geringer Spalt, insbesondere zwischen 3 mm und 15 mm, insbesondere zwischen 3 mm und 10 mm ermöglicht, sodass einerseits die Relativbewegung der Einsatzplatte bei einer Positionseinstellung beziehungsweise einer Positionsänderung ungehindert erfolgen kann. Insbesondere wird dadurch ein direktes Berühren und gegebenenfalls Entlangstreifen eines Seitenrands der Einsatzplatte an den Innenseiten der Seitenwände vermieden. Damit wird einerseits eine Beschädigung der Seitenwände vermieden, andererseits eine Beschädigung der Einsatzplatte sowie auch der Hubvorrichtung vermieden. Nicht zuletzt ist es durch diese Ausgestaltung auch vorteilhaft erreicht, dass durch diesen Spalt zwischen dem Rand der Einsatzplatte und den Innenseiten der Seitenwände ein Ablaufen von Flüssigkeit, die auf der Oberseite der Einsatzplatte vorhanden ist, problemlos in den Aufnahmeraum hinein erfolgen kann.

Vorzugweise weist die Wanne, insbesondere an der Bodenwand, einen Abfluss auf.

Dadurch kann Medium, welches in der Wanne angeordnet ist und sich dort sammelt, problemlos über den Abfluss ablaufen.

In einer vorteilhaften Ausführung ist vorgesehen, dass das Spülbecken eine Identifikationseinheit aufweist, mit welcher ein Nutzer direkt und/oder ein Nutzer abhängig von einem durchgeführten Bedienablauf des Spülbeckens mit mehreren Bedienvorgängen, der durch den Nutzer selbst durchgeführt wird, und/oder ein Nutzer abhängig von einer Art eines Bedienvorgangs des Spülbeckens erkennbar ist. Durch eine derartige Ausgestaltung kann einerseits erreicht werden, dass der Nutzer als Person selbst erkannt wird, beispielsweise über eine Kamera detektiert wird. Andererseits, wenn dies nicht möglich ist oder eine Kamera nicht vorhanden ist, kann der Nutzer indirekt über sein Bedienverhalten des Spülbeckens erkannt werden. Ein Bedienablauf kann in dem Zusammenhang eine Folge von spezifischen Bedienschritten des Spülbeckens sein. Eine Art des Bedienvorgangs kann beispielsweise die Stärke einer Bedienhandlung und/oder die Dauer einer Bedienhandlung sein. Beispielsweise kann dies die Art und Weise eines Einwirkens auf einen Wasserhahn und/oder auf eine Bedienvorrichtung sein. In dem Zusammenhang kann beispielsweise zumindest ein einziger Bedienschritt im Hinblick auf diese genannten detaillierten Spezifikationen ausgewertet werden und abhängig davon der Nutzer erkannt werden.

Ein weiterer Aspekt der Erfindung betrifft ein Verfahren zum Betreiben eines Spülbeckens gemäß Anspruch 13. Die Einsatzplatte wird mit einer Hubvorrichtung des Spülbeckens in Höhenrichtung des Spülbeckens relativ zur Wanne bewegt beziehungsweise verfahren. Mit einer Interaktionseinheit des Spülbeckens wird ein Betriebszustand des Spülbeckens erkannt und/oder eine Betriebszustandsänderung des Spülbeckens erkannt und/oder eine Bedienhandlung des Spülbeckens durch einen Nutzer erkannt. Abhängig von dem Erkennen durch die Interaktionseinheit wird die Hubvorrichtung zur automatischen Positionierung der Einsatzplatte betrieben und die Position der Einsatzplatte entsprechend verändert. Dabei kann die Hubvorrichtung auch so eingestellt werden, dass die Einsatzplatte gegenüber einer Horizontalebene schräggestellt beziehungsweise geneigt eingestellt werden kann. Die Positionsänderung wird dementsprechend als eine Kippbewegung um eine horizontal orientierte Achse ausgeführt.

Die damit erreichbaren Vorteile wurden bereits oben zum Spülbecken erläutert. Vorteilhafte Ausführungen des Spülbeckens sind als vorteilhafte Ausführungen des Verfahrens anzusehen.

Im Hinblick auf die individuellen Einstellungen der Einsatzplatte kann es möglich sein, dass die Positionsänderung der Einsatzplatte nicht nur durch direkte Handlungen des Nutzers, wie beispielsweise eine Geste oder einen Sprachbefehl oder ein Betätigen eines Bedienelements der Bedienvorrichtung erfolgt. Auch eine diesbezüglich indirekte Positionsänderung kann durch eine Logikverknüpfung erfolgen. Beispielsweise kann die Einsatzplatte individuell bewegt werden, wenn ein Nutzer einen Wasserhahn des Spülbeckens betätigt. Dies kann beispielsweise ein Annähern an den Wasserhahn oder ein Berühren des Wasserhahns oder ein tatsächliches Einschalten des Wasserhahns, sodass auch Wasser herausläuft, sein. Abhängig von dieser Betätigung der Funktionseinheit kann dann eine damit verknüpfte, insbesondere vorher im Lernmodus beziehungsweise Definiermodus referenzierte Referenzposition der Einsatzplatte automatisch eingestellt werden.

Die Identifikationseinheit kann eine Kamera sein. Sie kann jedoch auch beispielsweise ein biometrischer Sensor sein. Dieser kann beispielsweise biometrische Merkmale, wie spezifisches Rillenmuster der Haut des Fingers oder eine Iriserkennung des Auges ermöglichen.

Es kann vorgesehen sein, dass die Einsatzplatte zerstörungsfrei lösbar von der Hubvorrichtung entnehmbar und wieder aufsetzbar ist. Dies ist ein weiterer Vorteil, da somit die Einsatzplatte selbst entnommen und beispielsweise verbessert gereinigt werden kann. Darüber hinaus kann auch die Hubvorrichtung diesbezüglich verbessert gereinigt werden. Auch zu Wartungszwecken der Hubvorrichtung ist dies ein weiterer Vorteil. Ebenso ist es dann auch möglich, unterhalb der Einsatzplatte in den Aufnahmeraum der Wanne gelangen zu können. Somit kann auch dieser gegebenenfalls einfacher gereinigt werden.

Insbesondere ist die Wanne mit der Bodenwand und den Seitenwänden einstückig ausgebildet. Insbesondere ist die Wanne aus Metall ausgebildet.

Die Bodenwand kann eben oder leicht geneigt oder leicht gewölbt sein. Insbesondere ist vorgesehen, dass diejenige Stelle der Bodenwand, an welcher ein Auslass für einen Abfluss des Spülbeckens ausgebildet ist, bezüglich der Höhenlage am weitesten nach unten versetzt ist.

Es kann vorgesehen sein, dass die Oberseite der Platte vollständig eben ausgebildet ist. Sie kann jedoch auch eine geringe Wölbung aufweisen. Es ist auch möglich, dass die Oberseite der Einsatzplatte zumindest bereichsweise strukturiert ist. Dadurch kann eine gewisse Rauigkeit erzeugt werden. Ein unerwünschtes Verrutschen von darauf aufgebrachten Gegenständen kann dadurch verbessert vermieden werden. Beispielsweise ist dies vorteilhaft, wenn eine Positionsänderung der Einsatzplatte auftritt und noch Gegenstände auf der Oberseite der Einsatzplatte angeordnet sind. Ebenso ist es möglich, dass die Oberseite spezifische Positionierbereiche aufweist. Dies können Vertiefungen sein. Beispielsweise können derartige Vertiefungen jedoch relativ gering ausgebildet sein. Dies ist vorteilhaft, um beispielsweise Gefäße wie ein Glas oder dergleichen sicherer positionieren zu können. Insbesondere ist dies dann vorteilhaft, wenn eine Positionsänderung ein Kippen ist. Ein unerwünschtes Verrutschen derartiger Gefäße ist dann vermieden. Darüber hinaus ist durch derartige vorgegebene Positionierbereiche auch erreicht, dass beispielsweise dann, wenn Gefäße auf der Oberseite der Einsatzplatte aufgestellt sind und beispielsweise über den Wasserhahn befüllt werden sollen, bei einer Rotationsbewegung zielsicher das aus dem Wasserhahn auslaufende Wasser in die Gefäße einläuft und nicht umfänglich an den Gefäßen vorbei auf die Einsatzplatte trifft.

Mit den Angaben "oben", "unten", "vorne", "hinten, "horizontal", "vertikal", "Tiefenrichtung", "Breitenrichtung", "Höhenrichtung" sind die bei bestimmungsgemäßen Gebrauch und bestimmungsgemäßen Anordnen des Spülbeckens gegebenen Positionen und Orientierungen angegeben.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert. Es zeigen:
- Fig. 1: eine schematische Schnittdarstellung durch ein Ausführungsbeispiel eines erfindungsgemäßen Spülbeckens mit einer Einsatzplatte in einer ersten Position;
- Fig. 2: die Darstellung des Spülbeckens gemäß Fig. 2 mit der Einsatzplatte in einer zu Fig. 1 unterschiedlichen zweiten Position; und
- Fig. 3: eine Draufsicht auf ein Ausführungsbeispiel eines Spülbeckens.

In den Figuren werden gleiche oder funktionsgleiche Elemente mit den gleichen Bezugszeichen versehen.

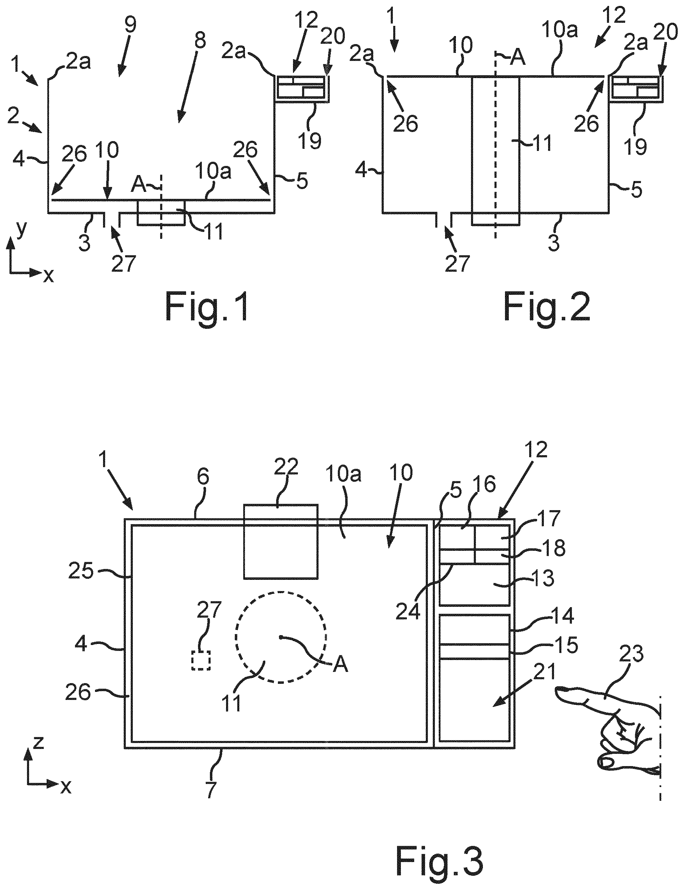

In Fig. 1 ist in einer schematischen Vertikalschnittdarstellung (x-y-Ebene mit Höhenrichtung y und Breitenrichtung x) ein Spülbecken 1 gezeigt. Das Spülbecken 1 weist eine Wanne 2 auf. Die Wanne 2 weist eine Bodenwand 3 sowie daran anschließende und sich nach oben erstreckende Seitenwände 4, 5, 6 (Fig. 3) und 7 (Fig. 3) auf. Die Wanne 2 ist insbesondere einstückig ausgebildet. Sie ist vorzugsweise aus Metall ausgebildet. Die Wanne 2 weist einen Aufnahmeraum 8 auf. Der Aufnahmeraum 8 ist durch die genannten Wände 3 bis 7 begrenzt. Damit weist die Wanne 2 eine obere Beschickungsöffnung 9 auf. Das Spülbecken 1 weist darüber hinaus eine Einsatzeinheit auf. Die Einsatzeinheit ist eine Einsatzplatte 10. Die Einsatzplatte 10 ist insbesondere einstückig ausgebildet. Die Einsatzplatte 10 ist eine zur Wanne 2 separate Komponente des Spülbeckens 1. Das Spülbecken 1 weist des Weiteren eine Hubvorrichtung 11 auf. Die Einsatzplatte 10 ist auf der Hubvorrichtung 11 angeordnet. Insbesondere ist sie zerstörungsfrei lösbar an der Hubvorrichtung 11 angeordnet. Durch die Hubvorrichtung 11 kann die Einsatzplatte 10 relativ zur Wanne 2 bewegt werden. In diesem Zusammenhang kann ein Kippen der Einsatzplatte 10 erfolgen. Dies bedeutet, dass die Einsatzplatte 10 mit ihrer Ebene in einem Winkel zu einer Horizontalebene eingestellt werden kann. Sie kann somit geneigt beziehungsweise schräggestellt positioniert werden. Zusätzlich kann eine Bewegung in Höhenrichtung (y-Richtung) des Spülbeckens 1 erfolgen. Zusätzlich zu der Bewegung in Höhenrichtung oder anstatt dazu kann ein Rotieren um eine Vertikalachse A der Hubvorrichtung 11 erfolgen. In Fig. 1 ist die Einsatzplatte 10 in einer beispielhaften Position in dem Aufnahmeraum 8 gezeigt. Insbesondere ist dies eine nach unten gefahrene Position. Die Einsatzplatte 10 ist diesbezüglich unmittelbar benachbart zur Bodenwand 3 angeordnet.

Das Spülbecken 1 weist eine Interaktionseinheit 12 auf. Die Interaktionseinheit 12 kann eine Anzeigeeinheit 13 (Fig. 3) aufweisen. Die Interaktionseinheit 12 kann eine Bedienvorrichtung 14 aufweisen. Die Bedienvorrichtung 14 kann eine oder mehrere Bedienelemente aufweisen. Die Bedienelemente können Drucktasten oder Schalter oder Kippelemente oder Drehknöpfe sein. Die Bedienvorrichtung 14 kann jedoch auch zusätzlich oder anstatt dazu ein berührsensitives Bedienfeld 15 aufweisen. In einer vorteilhaften Ausführung kann vorgesehen sein, dass die Interaktionseinheit 12 zumindest eine optische Erfassungseinheit 16 aufweist. Die optische Erfassungseinheit 16 kann beispielsweise eine Kamera sein. Die Kamera kann im für den Menschen sichtbaren Spektralbereich sensitiv sein. Die Interaktionseinheit 12 kann jedoch auch zusätzlich oder anstatt dazu eine Akustikeinheit 17 aufweisen. Diese Akustikeinheit 17 kann zum Empfang und/oder zur Ausgabe von Sprachsignalen ausgebildet sein. Darüber hinaus kann die Interaktionseinheit 12 eine Identifikationseinheit 18 aufweisen. Die Identifikationseinheit 18 ist zur Erkennung beziehungsweise zur Identifikation eines Nutzers des Spülbeckens 1 ausgebildet. Die Identifikationseinheit 18 kann beispielsweise auch durch die optische Erfassungseinheit 16 gebildet sein. Zusätzlich oder anstatt dazu kann die Identifikationseinheit 18 jedoch auch beispielsweise die Akustikeinheit 17 aufweisen. Dadurch kann beispielsweise durch Auswertung eines Sprachsignals eines Nutzers der Nutzer identifiziert werden. Zusätzlich oder anstatt dazu kann die Identifikationseinheit 18 eine Einheit zur Erfassung und Auswertung eines biometrischen Merkmals eines Nutzers ausgebildet sein. Beispielsweise kann dies ein Fingerabdrucksensor oder ein Sensor zur Erkennung eines Irismusters sein.

Wie in den Fig. 1 bis 3 zu erkennen ist, kann die Interaktionseinheit 12 seitlich und unmittelbar benachbart zur Wanne 2 ausgebildet sein. Beispielsweise kann hier ein nach oben offenes Aufnahmegehäuse 19 vorgesehen sein. Das Aufnahmegehäuse 19 kann separat zur Wanne 2 ausgebildet sein. Es kann jedoch auch zerstörungsfrei unlösbar mit der Wanne 2 gebildet sein. Insbesondere kann das Aufnahmegehäuse 19 auch einstückig mit der Wanne 2 ausgebildet sein. Die an das Aufnahmegehäuse 19 direkt anschließende Seitenwand, hier im Beispiel die Seitenwand 5, bildet auch eine Begrenzungswand für das Aufnahmevolumen 20 des Aufnahmegehäuses 19.

Damit ist das Aufnahmevolumen 20 von dem Aufnahmeraum 8 der Wanne separiert.

Des Weiteren weist die Wanne 2 eine Ablauföffnung 27 auf. Diese ist insbesondere in der Bodenwand 3 ausgebildet. Dadurch können Medien aus dem Aufnahmeraum 8 ablaufen.

In Fig. 2 ist die Darstellung gemäß Fig. 1 gezeigt, jedoch die Einsatzplatte 10 in einer zu Fig. 1 unterschiedlichen Position gezeigt. In Fig. 2 ist die Einsatzplatte 10 horizontal orientiert, jedoch nach oben verfahren. Insbesondere stellt diese Position die im Normalmodus maximal mögliche Höhenlage dar. Insbesondere ist in dieser Position eine Oberseite 10a der Einsatzplatte 10 bündig mit einem oberen Rand 2a der Wanne 2. Insbesondere bildet in dieser Position die Einsatzplatte 10 eine Abdeckung oder einen Deckel für den Aufnahmeraum 8. Dieser obere Rand 2a kann jedoch auch beispielsweise eine Oberseite eines Montagerahmens oder eines Zierrahmens sein, der Bestandteil des Spülbeckens 1 ist. Mit dem Montagerahmen kann das Spülbecken 1, insbesondere die Wanne 2, in einer Aussparung einer Arbeitsplatte montiert werden. Mit einem Zierrahmen kann die Wanne 2 von oben abgedeckt werden. Ein Spalt zwischen der Wanne 2 und einer Begrenzungswand in der Arbeitsplatte, die die Aussparung begrenzt, kann somit von oben abgedeckt werden. Ein derartiger Zierrahmen stellt insbesondere ein oberes Sichtbauteil der Anordnung dar.

Insbesondere weist das Spülbecken 1 auch eine Steuereinheit 21 (Fig. 3) auf. Durch die Steuereinheit 21 kann die Hubvorrichtung 11 betrieben werden. Insbesondere kann durch die Steuereinheit 21 auch die Interaktionseinheit 12 betrieben werden.

Das Spülbecken 1 kann, wie dies in der vereinfachten Draufsicht in Fig. 3 zu erkennen ist, vorzugsweise auch einen Wasserhahn 22 aufweisen. Der Wasserhahn 22 stellt eine Funktionseinheit des Spülbeckens 1 dar. Ebenso kann die Interaktionseinheit 12, insbesondere die Bedienvorrichtung 14, als eine Funktionseinheit des Spülbeckens 1 angesehen werden. Eine weitere Funktionseinheit des Spülbeckens 1 kann die Einsatzplatte 10 sein. Eine weitere Funktionseinheit des Spülbeckens 1 kann die Hubvorrichtung 11 sein.

Die Hubvorrichtung 11 weist vorzugsweise eine Hubeinheit und einen Motor auf. Dadurch kann die Hubvorrichtung 11 auch so eingestellt werden, dass die Einsatzplatte 10 gegenüber einer Horizontalebene schräggestellt beziehungsweise geneigt eingestellt werden kann. Zusätzlich kann sie in Richtung der Vertikalachse A in ihrer Länge beziehungsweise Höhe verändert werden. Darüber hinaus kann sie zusätzlich zur Längenveränderung oder anstatt dazu um die Vertikalachse A rotiert werden.

Mit der Interaktionseinheit 12 ist ein Betriebszustand des Spülbeckens 1 erkennbar und/oder eine Betriebszustandsänderung des Spülbeckens 1 erkennbar und/oder eine Bedienhandlung eines Nutzers, der das Spülbecken 1, insbesondere zumindest eine Funktionseinheit des Spülbeckens 1, bedient, erkannt werden. Abhängig von dem Erkennen durch die Interaktionseinheit 12 ist die Hubvorrichtung 11 zur automatischen Positionsänderung der Einsatzplatte 10 betreibbar. In Fig. 3 ist darüber hinaus eine schematische Darstellung eines Fingers 23 eines Nutzers gezeigt. Die Interaktionseinheit 12 ist vorzugsweise zur Erfassung einer Geste des Nutzers, insbesondere des Fingers 23, ausgebildet. Insbesondere ist die Geste eine berührungslose Geste. Zusätzlich oder anstatt dazu kann jedoch auch eine direkte Bedienung der Bedienvorrichtung 14 mit dem Finger 23 erfolgen. Es ist vorgesehen, dass ein Betriebszustand und/oder eine Betriebszustandsänderung durch die Kamera 16 und/oder die Akustikeinheit 17 und/oder die Bedienvorrichtung 14 erfasst werden kann. Ein Betriebszustand kann beispielsweise eine Einstellung der Bedienvorrichtung 14 und/oder eine Änderung des Betriebszustands kann eine Änderung der Einstellung der Bedienvorrichtung 14 sein.

Eine Positionsänderung der Einsatzplatte 10 kann abhängig von der Art und/oder Stärke und/oder Dauer eines Betriebszustands zumindest einer Funktionseinheit des Spülbeckens 1 und/oder eine Positionsänderung kann abhängig von der Art und/oder Stärke und/oder Dauer einer Betriebszustandsänderung zumindest einer derartigen Funktionseinheit des Spülbeckens 1 sein.

Die Interaktionseinheit 12 weist einen Normalmodus auf. In diesem wird auch der tatsächliche Betrieb des Spülbeckens 1 erfasst. Darüber hinaus weist die Interaktionseinheit 12 einen zum Normalmodus unterschiedlichen Definiermodus auf. Dieser kann beispielsweise durch einen Nutzer eingestellt werden. In diesem Definiermodus ist es ermöglicht, dass zumindest ein Nutzer zumindest eine Referenzposition der Einsatzplatte 10 definiert beziehungsweise vorgibt. Insbesondere kann eine derartige Referenzposition in diesem Definiermodus mit einem spezifischen Betriebszustand zumindest einer Funktionseinheit des Spülbeckens 1 und/oder mit einer definierten Betriebszustandsänderung zumindest einer Funktionseinheit des Spülbeckens 1 verknüpft werden. Zumindest eine derartige Referenzposition kann als ein Nutzerprofil in einer Speichereinheit 24 der Interaktionseinheit 12 abgespeichert werden.

In einer vorteilhaften Ausführung ist vorgesehen, dass die in Fig. 3 gezeigte Fläche (Tiefenrichtung z und Breitenrichtung x) der Oberseite 10a zumindest 80 Prozent, insbesondere zumindest 90 Prozent, insbesondere zumindest 95 Prozent der Fläche des Aufnahmeraums 8, die in einer Horizontalebene (in Fig. 3 die Figurenebene) betrachtet wird, beträgt. Insbesondere ist diese Fläche der Oberseite 10a jedoch kleiner als 99 Prozent dieser Fläche des Aufnahmeraums 8 in der genannten Horizontalebene. Dadurch ist erreicht, dass ein umlaufender Rand 25 der Einsatzplatte 10 beabstandet zu den Seitenwänden 4, 5, 6 und 7 ist. Insbesondere ist dadurch ein umlaufender Spalt 26 zwischen der Einsatzplatte 10 und den Seitenwänden 4 bis 7 gebildet. Der Spalt 26 kann zwischen 3 mm und 15 mm betragen. Vorzugsweise ist dieser Spalt 26 zumindest in der Horizontallage der Einsatzplatte 10 so klein, dass Gegenstände wie ein Besteck oder dergleichen, nicht hindurchrutschen können. Auch das Einklemmen eines Fingers 23 ist dann in dieser Horizontallage der Einsatzplatte 10 vermeidbar.

Abhängig von zumindest einem Einflusskriterium kann dann automatisch das Einstellen der Einsatzplatte 10 bezüglich ihrer Position erfolgen. Insbesondere kann somit die Positionsänderung automatisch und sehr definiert und bedarfsgerecht erfolgen.

In einer vorteilhaften Ausführung ist vorgesehen, dass eine Positionsänderung grundsätzlich nicht gestartet wird und/oder eine bereits gestartete Positionsänderung zumindest unterbrochen wird, wenn diese nicht oder nicht mehr durchgeführt werden kann. Beispielsweise kann dies dann der Fall sein, wenn auf der Oberseite 10a Gegenstände abgestellt sind, die eine entsprechende Positionsänderung der Einsatzplatte 10 negativ beeinflussen würden. Dies kann beispielsweise dann der Fall sein, wenn eine Kippbewegung als Positionsänderung durchgeführt werden soll, jedoch die auf der Oberseite 10a vorhandenen Gegenstände dann verrutschen oder herunterfallen könnten und dies zur Beschädigung dieser Gegenstände führen würde. Beispielsweise kann dies dann der Fall sein, wenn auf der Oberseite 10a Geschirr oder ein Trinkgefäß, wie ein Glas oder dergleichen, aufgestellt ist. Ebenso kann das oben genannte Szenario durchgeführt werden, wenn ein Gegenstand, ausgehend von der Position der Einsatzplatte 10 in Fig. 2, den Spalt 26 überdeckend angeordnet ist. Würde die Einsatzplatte 10 ausgehend von dieser oberen Stellung gekippt werden, könnte dies auch zu einem unerwünschten Umfallen dieses Gefäßes führen. Ebenso kann das oben geschilderte Szenario durchgeführt werden, wenn sich Gegenstände in dem Spalt 26 befinden und eine Positionsänderung der Einsatzplatte 10 dann zu einem Verspreizen oder Verklemmen führen würde und diesbezüglich eine Beschädigung auftreten könnte.

Alle diese potentiellen Szenarien können mit einem oder mehreren Sensoren des Spülbeckens 1 erfasst werden.

In einer vorteilhaften Ausführung ist vorgesehen, dass derartige Gegenstände, die zu den oben genannten Szenarien führen könnten, durch die Interaktionseinheit 12 erfasst werden. Beispielsweise kann dies durch die optische Erfassungseinheit 16 erfolgen. Ebenso kann jedoch die Hubvorrichtung 11 auch einen Kraftsensor aufweisen, der dann, wenn die Hubvorrichtung 11 größer einem definierten Kraftschwellwert beansprucht wird, die weitere Positionsänderung zumindest unterbricht oder eine Positionsänderung grundsätzlich nicht startet.

Es kann auch ein zum Normalmodus der Hubeinheit unterschiedlicher Demontagemodus eingestellt werden. In diesem wird die Hubeinheit der Hubvorrichtung 11 über die im Normalmodus maximale angehobene Stellung der Hubeinheit und somit auch der entsprechenden Stellung der Einsatzplatte 10 eine in Höhenrichtung noch höher liegende Stellung eingestellt. In der maximal angehobenen Stellung im Normalmodus ist insbesondere vorgesehen, dass die Oberseite der Einsatzplatte 10 bündig mit der Oberseite des oberen Rands 2a der Wanne 2 oder einem Zierrahmen oder einem Montagerahmen ist. In der dazu höher liegenden Demontagestellung ist die Einsatzplatte 10 vorzugsweise so positioniert, dass sie mit ihrer Unterseite um einen Vertikalabstand höher angeordnet ist, als dieser obere Rand 2a. Insbesondere beträgt dieser Vertikalabstand zumindest 2cm, insbesondere zumindest 3 cm. Dadurch kann die Einsatzplatte 10 an ihrem Rand 25 durch eine Hand umgriffen werden und sicher zum Abnehmen von der Hubeinheit gehalten werden. Die Demontagestellung ist insbesondere eine Horizontallage der Einsatzplatte 10. Die Unterseite der Einsatzplatte 10 ist somit vollständig oberhalb dem oberen Rand 2a positioniert.

### Bezugszeichenliste

- 1: Spülbecken
- 2: Wanne
- 2a: oberer Rand
- 3: Bodenwand
- 4: Seitenwand
- 5: Seitenwand
- 6: Seitenwand
- 7: Seitenwand
- 8: Aufnahmeraum
- 9: Beschickungsöffnung
- 10: Einsatzplatte
- 10a: Oberseite
- 11: Hubvorrichtung
- 12: Interaktionseinheit
- 13: Anzeigeeinheit
- 14: Bedienvorrichtung
- 15: Bedienfeld
- 16: optische Erfassungseinheit
- 17: Akustikeinheit
- 18: Identifikationseinheit
- 19: Aufnahmegehäuse
- 20: Aufnahmevolumen
- 21: Steuereinheit
- 22: Wasserhahn
- 23: Finger
- 24: Speichereinheit
- 25: Rand
- 26: Spalt
- 27: Ablauföffnung
- y: Höhenrichtung
- A: Vertikalachse

## Patentansprüche

1. Spülbecken (1) mit einer Wanne (2), die eine Bodenwand (3) und daran anschließende Seitenwände (4, 5, 6, 7) aufweist, wobei die Wanne (2) einen durch die Wände (4 bis 7) begrenzten Aufnahmeraum (8) aufweist, wobei das Spülbecken (1) eine zur Wanne (2) separate Einsatzplatte (10) aufweist, die in den Aufnahmeraum (8) eingesetzt ist, wobei das Spülbecken (1) eine Hubvorrichtung (11) aufweist, mit welcher die Einsatzplatte (10) in Höhenrichtung des Spülbeckens relativ zur Wanne (2) verfahrbar ist, wobei das Spülbecken (1) eine Interaktionseinheit (12) aufweist, mit welcher ein Betriebszustand des Spülbeckens (1) erkennbar ist und/oder eine Betriebszustandsänderung des Spülbeckens (1) erkennbar ist und/oder eine Bedienhandlung eines Nutzers (23) des Spülbeckens (1) erkennbar ist, wobei abhängig von dem Erkennen eines derartigen Einflussfaktors durch die Interaktionseinheit (12) die Hubvorrichtung (11) zur automatischen Positionsänderung der Einsatzplatte (10) betreibbar ist, **dadurch gekennzeichnet, dass** die Hubvorrichtung (11) auch so eingestellt werden kann, dass die Einsatzplatte (10) gegenüber einer Horizontalebene schräggestellt beziehungsweise geneigt eingestellt werden kann und die Positionsänderung eine Kippbewegung um eine horizontal orientierte Achse ist.

2. Spülbecken (1) nach Anspruch 1, **dadurch gekennzeichnet, dass** die Interaktionseinheit (12) eine Kamera (16) und/oder eine Bedienvorrichtung (14) aufweist.

3. Spülbecken (1) nach Anspruch 2, **dadurch gekennzeichnet, dass** ein Betriebszustand und/oder eine Betriebszustandsänderung durch die Kamera (16) erfassbar ist.

4. Spülbecken (1) nach Anspruch 2 oder 3, **dadurch gekennzeichnet, dass** ein Betriebszustand eine Einstellung der Bedienvorrichtung (14) ist und/oder eine Änderung des Betriebszustands eine Änderung der Einstellung der Bedienvorrichtung (14) ist.

5. Spülbecken (1) nach einem der vorhergehenden Ansprüche, **dadurch gekennzeichnet, dass** die Positionsänderung abhängig von der Art und/oder Stärke und/oder Dauer eines Betriebszustands zumindest einer Funktionseinheit (10, 11, 14, 22) des Spülbeckens (1) und/oder eine Positionsänderung abhängig von der Art und/oder Stärke und/oder Dauer einer Betriebszustandsänderung zumindest einer Funktionseinheit (10, 11, 14, 22) des Spülbeckens (1) ist.

6. Spülbecken (1) nach Anspruch 5, **dadurch gekennzeichnet, dass** das Spülbecken (1) als Funktionseinheit einen Wasserhahn (22) und/oder eine Bedienvorrichtung (14) und/oder die Einsatzplatte (10) und/oder die Hubvorrichtung (11) aufweist.

7. Spülbecken (1) nach einem der vorhergehenden Ansprüche, **dadurch gekennzeichnet, dass** als Positionsänderung ausgehend von einer gekippten Lage der Einsatzplatte (10) die Neigung vergrößert oder verkleinert wird.

8. Spülbecken (1) nach einem der vorhergehenden Ansprüche, **dadurch gekennzeichnet, dass** eine Bedienhandlung eine berührungslose Geste des Nutzers (23) oder ein Sprachbefehl oder ein eine Bedienfläche der Bedienvorrichtung (14) berührender Vorgang oder ein Bedienvorgang eines Wasserhahns (22) des Spülbeckens (1) ist.

9. Spülbecken (1) nach einem der vorhergehenden Ansprüche, **dadurch gekennzeichnet, dass** die Interaktionseinheit (12) einen zu einem Normalmodus unterschiedlichen Definiermodus aufweist, in dem zumindest ein Nutzer (23) zumindest eine Referenzposition der Einsatzplatte (10) definiert vorgeben kann, insbesondere wobei eine Referenzposition der Einsatzplatte (10) mit einem spezifischen Betriebszustand des Spülbeckens (1) und/oder einer definierten Betriebszustandsänderung des Spülbeckens (1) verknüpft werden kann.

10. Spülbecken (1) nach Anspruch 9, **dadurch gekennzeichnet, dass** die zumindest eine Referenzposition als Nutzerprofil in einer Speichereinheit (24) der Interaktionseinheit (12) abgespeichert ist.

11. Spülbecken (1) nach einem der vorhergehenden Ansprüche, **dadurch gekennzeichnet, dass** eine Oberseite (10a) der Einsatzplatte (10) eine Fläche aufweist, die zumindest 80%, insbesondere zumindest 90%, insbesondere zumindest 95% der Fläche des Aufnahmeraums (8) in einer Horizontalebene beträgt, aber kleiner als 99% dieser Fläche des Aufnahmeraums (8) ist.

12. Spülbecken (1) nach einem der vorhergehenden Ansprüche, **dadurch gekennzeichnet, dass** das Spülbecken (1) eine Identifikationseinheit (16, 17, 18) aufweist, mit welcher ein Nutzer (23) direkt und/oder ein Nutzer (23) abhängig von einem Bedienablauf des Spülbeckens (1) mit mehreren Bedienvorgängen und/oder ein Nutzer (23) abhängig von einer Art eines Bedienvorgangs des Spülbeckens (1) identifizierbar ist.

13. Verfahren zum Betreiben eines Spülbeckens (1) mit einer Wanne (2), die eine Bodenwand (3) und daran anschließende Seitenwände (4, 5, 6, 7) aufweist, wobei die Wanne (2) einen durch die Wände (4 bis 7) begrenzten Aufnahmeraum (8) aufweist, wobei das Spülbecken (1) eine zur Wanne (2) separate Einsatzplatte (10) aufweist, die in den Aufnahmeraum (8) eingesetzt ist, wobei die Einsatzplatte (10) in Höhenrichtung des Spülbeckens relativ zur Wanne (2) mit einer Hubvorrichtung (11) des Spülbeckens (1) verfahren wird, und mit einer Interaktionseinheit (12) des Spülbeckens (1) ein Betriebszustand des Spülbeckens (1) erkannt wird und/oder eine Betriebszustandsänderung des Spülbeckens (1) erkannt wird und/oder eine Bedienhandlung eines Nutzers (23) des Spülbeckens (1) erkannt wird, wobei abhängig von dem Erkennen durch die Interaktionseinheit (12) die Hubvorrichtung (11) zur automatischen Positionsänderung der Einsatzplatte (10) betrieben wird und die Position der Einsatzplatte (10) verändert wird, **dadurch gekennzeichnet, dass** die Hubvorrichtung (11) auch so eingestellt werden kann, dass die Einsatzplatte (10) gegenüber einer Horizontalebene schräggestellt beziehungsweise geneigt eingestellt werden kann und dass die Positionsänderung als eine Kippbewegung um eine horizontal orientierte Achse ausgeführt wird.

## Claims

1. Sink (1) with a basin (2) which has a base wall (3) and lateral walls (4, 5, 6, 7) adjoining the base wall, wherein the basin (2) has a receiving area (8) delimited by the walls (4 to 7), wherein the sink (1) has an insert plate (10) which is separate from the basin (2) and which is inserted into the receiving area (8), wherein the sink (1) has a lifting device (11), by means of which the insert plate (10) can be moved relative to the basin (2) in the height direction of the sink, wherein the sink (1) has an interaction unit (12), by means of which an operating state of the sink (1) can be detected and/or a change in the operating state of the sink (1) can be detected and/or an operating action by a user (23) of the sink (1) can be detected, wherein the lifting device (11) can be operated so as to automatically change the position of the insert plate (10) on the basis of the detection of such an influencing factor by means of the interaction unit (12), **characterised in that** the lifting device (11) can also be set up such that the insert plate (10) can be set in an oblique or inclined manner relative to a horizontal plane and the change in the position is a tilting movement about a horizontally oriented axis.

2. Sink (1) according to claim 1, **characterised in that** the interaction unit (12) has a camera (16) and/or an operating device (14).

3. Sink (1) according to claim 2, **characterised in that** an operating state and/or a change in the operating state may be recorded by the camera (16).

4. Sink (1) according to claim 2 or 3, **characterised in that** an operating state is a setting of the operating device (14) and/or a change in the operating state is a change in the setting of the operating device (14).

5. Sink (1) according to one of the preceding claims, **characterised in that** the change in the position is on the basis of the type and/or intensity and/or duration of an operating state of at least one functional unit (10, 11, 14, 22) of the sink (1) and/or a change in the position is on the basis of the type and/or intensity and/or duration of a change in the operating state of at least one functional unit (10, 11, 14, 22) of the sink (1).

6. Sink (1) according to claim 5, **characterised in that** the sink (1) has a faucet (22) and/or an operating device (14) and/or the insert plate (10) and/or the lifting device (11) as a functional unit.

7. Sink (1) according to one of the preceding claims, **characterised in that**, as the change in position, starting from a tilted position of the insert plate (10), the inclination is increased or reduced..

8. Sink (1) according to one of the preceding claims, **characterised in that** an operating action is a contactless gesture of the user (23) or a speech command or a process of touching an operating surface of the operating device (14) or an operating process of a faucet (22) of the sink (1).

9. Sink (1) according to one of the preceding claims, **characterised in that** the interaction unit (12) has a defining mode which is different from a normal mode and in which at least one user (23) may predetermine in a defined manner at least one reference position of the insert plate (10), in particular wherein a reference position of the insert plate (10) may be linked with a specific operating state of the sink (1) and/or a defined change in the operating state of the sink (1).

10. Sink (1) according to claim 9, **characterised in that** the at least one reference position is stored as a user profile in a memory unit (24) of the interaction unit (12).

11. Sink (1) according to one of the preceding claims, **characterised in that** a top (10a) of the insert plate (10) has a surface which is at least 80%, in particular at least 90%, in particular at least 95%, of the surface of the receiving area (8) in a horizontal plane but less than 99% of this surface of the receiving area (8).

12. Sink (1) according to one of the preceding claims, **characterised in that** the sink (1) has an identification unit (16, 17, 18), by means of which a user (23) may be identified directly and/or a user (23) may be identified as a function of an operating sequence of the sink (1) with a plurality of operating processes and/or a user (23) may be identified as a function of a type of operating process of the sink (1).

13. Method for operating a sink (1) with a basin (2) which has a base wall (3) and lateral walls (4, 5, 6, 7) adjoining the base wall, wherein the basin (2) has a receiving area (8) delimited by the walls (4 to 7), wherein the sink (1) has an insert plate (10) which is separate from the basin (2) and which is inserted into the receiving area (8), wherein the insert plate (10) is moved relative to the basin (2) in the height direction of the sink by a lifting device (11) of the sink (1), and by means of an interaction unit (12) of the sink (1) an operating state of the sink (1) is detected and/or a change in the operating state of the sink (1) is detected and/or an operating action by a user (23) of the sink (1) is detected, wherein the lifting device (11) is operated so as to automatically change the position of the insert plate (10), and the position of the insert plate (10) is changed, on the basis of the detection by means of the interaction unit (12), **characterised in that** the lifting device (11) can also be set up such that the insert plate (10) can be set in an oblique or inclined manner relative to a horizontal plane and the change in position is designed as a tilting movement about a horizontally oriented axis.

## Revendications

1. Évier (1) comprenant une cuve (2), qui comprend une paroi de fond (3) et des parois latérales (4, 5, 6, 7) attenantes à celle-ci, dans lequel la cuve (2) comprend un espace de réception (8) délimité par les parois (4 à 7), dans lequel l'évier (1) comprend une plaque d'insertion (10) distincte de la cuve (2), qui est insérée dans l'espace de réception (8), dans lequel l'évier (1) comprend un dispositif de levage (11), au moyen duquel la plaque d'insertion (10) peut être déplacée dans le sens de la hauteur de l'évier par rapport à la cuve (2), dans lequel l'évier (1) comprend une unité d'interaction (12), au moyen de laquelle un état de fonctionnement de l'évier (1) peut être détecté et/ou un changement d'état de fonctionnement de l'évier (1) peut être détecté, et/ou une action de commande par un utilisateur (23) de l'évier (1) peut être détectée, dans lequel le dispositif de levage (11) peut être actionné de façon à changer automatiquement la position de la plaque d'insertion (10) sur la base de la détection d'un tel facteur d'influence au moyen de l'unité d'interaction (12), **caractérisé en ce que** le dispositif de levage (11) peut être réglé en outre de sorte que la plaque d'insertion (10) puisse être ajustée dans une position inclinée par rapport à un plan horizontal, le changement de position étant un mouvement de basculement autour d'un axe orienté horizontalement.

2. Évier (1) selon la revendication 1, **caractérisé en ce que** l'unité d'interaction (12) comprend une caméra (16) et/ou un dispositif de commande (14).

3. Évier (1) selon la revendication 2, **caractérisé en ce que** l'état de fonctionnement et/ou un changement de l'état de fonctionnement peut être détecté par la caméra (16).

4. Évier (1) selon la revendication 2 ou 3, **caractérisé en ce qu'**un état de fonctionnement est un réglage du dispositif de commande (4) et/ou un changement de l'état de fonctionnement est un changement du réglage du dispositif de commande (14).

5. Évier (1) selon l'une des revendications précédentes, **caractérisé en ce que** le changement de position est fonction du type et/ou de l'intensité et/ou de la durée d'un état de fonctionnement d'au moins une unité fonctionnelle (10, 11, 14, 22) de l'évier (1), et/ou un changement de position est fonction du type et/ou de l'intensité et/ou de la durée d'un changement d'état de fonctionnement d'au moins une unité fonctionnelle (10, 11, 14, 22) de l'évier (1).

6. Évier (1) selon la revendication 5, **caractérisé en ce que** l'évier (1) comprend, à titre d'unité fonctionnelle, un robinet d'eau (22) et/ou un dispositif de commande (14) et/ou la plaque d'insertion (10) et/ou le dispositif de levage (11).

7. Évier (1) selon l'une des revendications précédentes, **caractérisé en ce qu'**à titre de changement de position, l'inclinaison est augmentée ou diminuée à partir d'une position inclinée de la plaque d'insertion (10).

8. Évier (1) selon l'une des revendications précédentes, **caractérisé en ce qu'**une action de commande est un geste sans contact d'un utilisateur (23) ou une commande vocale ou une action de contact avec une surface de commande du dispositif de commande (14) ou une opération de commande d'un robinet d'eau (22) de l'évier (1).

9. Évier (1) selon l'une des revendications précédentes, **caractérisé en ce que** l'unité d'interaction (12) comprend un mode de définition, différent d'un mode normal, dans lequel au moins un utilisateur (23) peut définir au moins une position de référence de la plaque d'insertion (10), dans lequel une position de référence de la plaque d'insertion (10) peut être associée à un état de fonctionnement spécifique de l'évier (1) et/ou à un changement d'état de fonctionnement défini de l'évier (1).

10. Évier (1) selon la revendication 9, **caractérisé en ce que** l'au moins une position de référence est mise en mémoire sous forme d'un profil d'utilisateur dans une unité de mémoire (24) de l'unité d'interaction (12).

11. Évier (1) selon l'une des revendications précédentes, **caractérisé en ce qu'**un côté supérieur (10a) de la plaque d'insertion (10) a une surface, qui est d'au moins 80 %, en particulier d'au moins 90 %, et plus particulièrement d'au moins 95 % de la surface de l'espace de réception (8) dans un plan horizontal, mais qui est inférieure à 99 % de cette surface de l'espace de réception (8).

12. Évier (1) selon l'une des revendications précédentes, **caractérisé en ce que** l'évier (1) comprend une unité d'identification (16, 17, 18), au moyen de laquelle un utilisateur (23) peut être identifié directement et/ou un utilisateur (23) peut être identifié en fonction d'une séquence de commande de l'évier (1) comportant plusieurs opérations de commande et/ou en fonction d'un type d'opération de commande de l'évier (1).

13. Procédé pour faire fonctionner un évier (1) comprenant une cuve (2), qui comprend une paroi de fond (3) et des parois latérales (4, 5, 6, 7) attenantes à celle-ci, dans lequel la cuve (2) comprend un espace de réception (8) délimité par les parois (4 à 7), dans lequel l'évier (1) comprend une plaque d'insertion (10) distincte de la cuve (2), qui est insérée dans l'espace de réception (8), dans lequel la plaque d'insertion (10) est déplacée dans le sens de la hauteur de l'évier (1) par rapport à la cuve (2) au moyen d'un dispositif de levage (11) de l'évier (1), et un état de fonctionnement de l'évier (1) est détecté et/ou un changement d'état de fonctionnement de l'évier (1) est détecté et/ou une action de commande par un utilisateur (23) de l'évier (1) est détectée au moyen d'une unité d'interaction (12) de l'évier (1), dans lequel le dispositif de levage (11) est actionné pour modifier automatiquement la position de la plaque d'insertion (10) et la position de la plaque d'insertion (10) est modifiée en fonction de la détection par l'unité d'interaction (12), **caractérisé en ce que** le dispositif de levage (11) peut en outre être réglé de sorte que la plaque d'insertion puisse être ajustée de façon à être inclinée par rapport à un plan horizontal, le changement de position étant un mouvement de basculement autour d'un axe orienté horizontalement.
